# EUROPÄISCHE PATENTSCHRIFT

(11) **EP 3 487 048 B1**
(45) Veröffentlichungstag und Bekanntmachung des Hinweises auf die Patenterteilung: **28.02.2024**
(21) Anmeldenummer: 18000814.6
(22) Anmeldetag: 17.10.2018
(51) Int. Cl.: H02K 15/00, H02K 17/16

(54) **KURZSCHLUSSLÄUFER MIT GETEILTEN KURZSCHLUSSRINGEN UND HERSTELLUNGSVERFAHREN EINES DERARTIGEN KURZSCHLUSSLÄUFERS**
SQUIRREL CAGE ROTOR COMPRISING SPLIT END RINGS AND MANUFACTURING METHOD OF SUCH A SQUIRREL CAGE ROTOR
ROTOR A CAGE ECUREUIL COMPRENANT DES ANNEAUX DE COURT-CIRCUIT DIVISES ET PROCÉDÉ DE FABRICATION D'UN TEL ROTOR A CAGE ECUREUIL

(30) Priorität: 16.11.2017 DE 102017010685
(43) Veröffentlichungstag der Anmeldung: 22.05.2019
(73) Patentinhaber: Wieland-Werke AG, 89079 Ulm (DE)
(72) Erfinder: Thumm, Gerhard, 89155 Erbach (DE); Voggeser, Volker, 89250 Senden (DE); Wolf, Michael, 89077 Ulm (DE); Kästle, Christoph, 89077 Ulm (DE)

(56) Entgegenhaltungen:
- WO-A1-2012/137235
- JP-A- H04 344 139
- US-A- 5 992 003
- US-A1- 2013 127 291
- US-B1- 9 570 968

## Beschreibung

Die Erfindung betrifft einen Kurzschlussläufer gemäß dem Oberbegriff des Anspruchs 1.

Bekannte Kurzschlussläufer umfassen ein mit Nuten versehenes Läuferblechpaket und in den Nuten eingebrachte Läuferstäbe aus elektrisch gut leitendem Material. Die Enden der Läuferstäbe stehen über die Stirnseiten des Läuferblechpakets vor und sind mit kompakten Kurzschlussringen hart verlötet oder verschweißt. Die Enden der Läuferstäbe ragen in eingedrehte Ringnuten in den Kurzschlussringen, die das Bett für das Hartlot bilden und mit diesem gefüllt sind. Zur Verhinderung des Aufblätterns des Läuferblechpaketes und von störenden Schwingungen werden stirnseitig gesonderte kompakte Druckringe an das Läuferblechpaket angepresst. Um ferner eine Axialverschiebung der Läuferstäbe in den Nuten des Läuferblechpakets zu verhindern, sind sie mit dem Läuferblechpaket mechanisch fest verbunden.

Aus der Druckschrift DE 34 21 537 A1 ist ein Kurzschlussläufer mit Läuferwicklung bekannt. Die Läuferwicklung umfasst elektrisch leitende Läuferstäbe, die in geschlossenen Nuten eines Läuferblechpaketes angeordnet sind und über dessen Stirnseiten vorragen. Die überstehenden Enden sind mit elektrisch gut leitenden Kurzschlussringen leitend verbunden. Die Kurzschlussringe sind, den Läuferblechen entsprechend, als genutete Blechpakete aus elektrisch gut leitendem Werkstoff ausgebildet und als stirnseitige Druckkörper an der ganzen Fläche wärmeübertragend eng am Läuferblechpaket anliegend in ihren geschlossenen Nuten mit den Läuferstäben fest verbunden. Eine Besonderheit ist, dass die elektrisch leitenden Einzelbleche für die Kurzschlussringe eine größere Dicke als die Läuferbleche aufweisen, im Übrigen jedoch die gleiche Form und Größe wie diese haben. Bei der Herstellung eines Kurzschlussläufers werden die Kurzschlussringe und die Läuferbleche gemeinsam paketiert, mit den stirnseitig eingeschobenen Läuferstäben bestückt und danach unter axialer Pressung des gesamten Paketes die Enden der Läuferstäbe mit den Kurzschlussringen hart verlötet.

Zudem ist aus der Druckschrift DE 195 42 962 C1 ein Käfigläufer mit Kurzschlussringen für eine Verwendung in einer Asynchronmaschine bekannt. Die Kurzschlussringe bestehen aus Kupferblechen, die untereinander beabstandet sind und zwischen den Blechlagen Kühlkanäle bilden. Die Abstände zwischen den Kupferblechen werden durch entsprechende Abstandshalter aufrechterhalten. Bei der Anordnung der Kurzschlussringe erstreckt sich der mit Lot hergestellte Verbund in axialer Richtung des Käfigläufers entlang der Läuferstäbe bis in das Läuferblechpaket hinein, wodurch Endscheiben entfallen können.

Aus der Druckschrift US 9 570 968 B1 ist ein Kurzschussläufer als Rotor eines Induktionsmotors bekannt. Der Rotor umfasst ein Läuferblechpaket und zwei Kurzschlussringanordnungen. Die erste Kurzschlussringanordnung ist angrenzend an eine erste Endfläche des Läuferblechpakets. Die zweite Kurzschlussringanordnung ist angrenzend an eine zweite Endfläche des Läuferblechpakets. Beide Kurzschlussringanordnungen umfassen eine Vielzahl von übereinander gestapelten leitenden Scheiben, jeweils mit einer Vielzahl von Ausnehmungen, durch welche die Enden der Läuferstäbe aus dem Läuferblechpaket hindurchtreten. Jeweils benachbarte Scheiben weisen einen gewissen Abstand zueinander auf. In dieser Nut bzw. Kerbe werden die Enden der Läuferstäbe mit den gestapelten leitenden Scheiben durch Elektronenstrahlschweißen oder Laserschweißen miteinander verschweißt. Der Energieeintrag des Elektronen- oder Laserstrahls wird auf eine Schweißzone gerichtet, die von den Umfangsseitenflächen benachbarter leitender Scheiben nur bis zu einer Außenkante des jeweiligen Läuferstabes reicht. Die Tiefe der Schweißzone liegt zwischen 4 mm und 6 mm. Da ein Elektronen- oder der Laserstrahl auf die Nuten gerichtet ist, kann die Energie des Elektronen- oder Laserstrahls ohne nennenswerten Energieverlust auf die radial außen liegende Oberfläche eines Läuferstabes eingebracht werden. Der Fügebereich befindet sich folglich ausgehend von den Umfangsseitenflächen der Scheiben in den Nuten radial einwärts gerichtet bis hin zur Läuferstaboberfläche.

Aus der Druckschrift WO 2012/137235 A1 ist ein Kurzschlussläufer als Rotor für einen induktiven Motor offenbart, der eine Welle umfasst und einen Rotorkern, der aus einer Vielzahl von laminierten Läuferblechen ausgebildet ist. In einer Vielzahl von Nuten, die so angeordnet sind, dass sie durch den Rotorkern hindurchgehen sind Läuferstäbe vorgesehen, welche mit massiv ausgeführten Kurzschlussringen in Kontakt treten. Um die Kurzschlussringe sind radial außen und radial innenliegend Schutzringe angeordnet, die aus einer Vielzahl von laminierten Platten gebildet sind. Der äußere Schutzring dient zum Schutz des Außenumfangs eines Kurzschlussrings. Der jeweils innere Schutzring dient zum Verhindern eines Kontakts zwischen dem Innenumfang des Kurzschlussrings und der Drehachse. Zudem ist jeweils eine axial auf die Kurzschlussringe folgende Endplatte vorgesehen.

Aus der Druckschrift US 2013/0127291 A1 ist ein Kurzschlussläufer einer Asynchronmaschine bekannt. Der Kurzschlussläufer umfasst ein Läuferblechpaket mit im Innern angeordneten Läuferstäben und Kurzschlussringen, wobei die Kurzschlussringe aus einem Scheibenpaket bestehen, welches lagenweise aus Scheiben mit Ausnehmungen aufgebaut ist, durch welche die Enden der Läuferstäbe aus dem Läuferblechpaket hindurchragen. Benachbarte Scheiben sind im Scheibenpaket untereinander beabstandet und im Zwischenraum mit einer Lötverbindung gefügt.

Der Erfindung liegt die Aufgabe zugrunde, einen Kurzschlussläufer hinsichtlich einer Verbesserung der Kurzschlussringe weiterzubilden.

Die Erfindung wird bezüglich eines Kurzschlussläufers durch die Merkmale des Anspruchs 1 wiedergegeben. Die weiteren rückbezogenen Ansprüche betreffen vorteilhafte Aus- und Weiterbildungen der Erfindung.

Die Erfindung schließt einen Kurzschlussläufer ein, mit Welle, Läuferblechpaket mit im Innern angeordneten Läuferstäben und Kurzschlussringen, wobei zumindest ein Teil eines Kurzschlussringes aus einem Scheibenpaket besteht, welches lagenweise aus Scheiben mit Ausnehmungen aufgebaut ist, durch welche die Enden der Läuferstäbe aus dem Läuferblechpaket hindurchtreten. Gemäß der Erfindung sind benachbarte Scheiben im Scheibenpaket untereinander beabstandet und bilden einen Spalt aus. Der durch den Spalt verursachte Abstand zwischen zwei benachbarten Scheiben ist durch in den Scheiben angeordnete Ausformungen gebildet ist, wobei im Spalt zumindest im Bereich der Ausformungen eine Lötverbindung über den Außenumfang vorhanden. Diese Lötverbindung erstreckt sich radial in Richtung Welle einwärts und umschließt die Ausformungen, die stufenartig ausgebildet sind. Außerdem ist Lötmaterial axial in den Restspalt zwischen Ausnehmungen und Läuferstäbe eingebracht. Der Kurzschlussläufer ist insbesondere für eine Verwendung in einer Asynchronmaschine vorgesehen.

Die Erfindung geht dabei von der Überlegung aus, dass das Läuferblechpaket mit der Welle und den Kurzschlussringen nach dem Fügevorgang ein kompaktes Kurzschlussläuferbauteil ergibt. Im Läuferblechpaket und den Kurzschlussringen sind Läuferstäbe hindurchgeführt, die mit dem Material der Kurzschlussringe elektrisch leitend verbunden sind. Hierzu haben die Läuferstäbe in Bezug auf das Läuferblechpaket eine Überlänge, so dass diese in Ausnehmungen in die Kurzschlussringe hineinragen. Die Kurzschlussringe werden an beiden Seiten des Läuferblechpakets auf der Welle positioniert. Jeder Kurzschlussring besteht selbst aus einem Scheibenpaket, das aus mehreren einzelnen Scheiben mit gleichem Durchmesser aufgebaut ist. Die Scheiben selbst weisen auf der Scheibenfläche so viele Ausnehmungen auf, wie Läuferstäbe zum Aufbau eines Kurzschlussläufers benötigt werden. Diese zunächst lose zueinander angeordneten Einzelbauteile müssen zu einem kompakten Kurzschlussläufer verbunden werden.

Der Fügevorgang erfolgt ausgehend von der Mantelfläche jedes Kurzschlussrings.

Betrachtet man die Geometrie einer Scheibe als Zylinder, so ist die Mantelfläche die stirnseitige Hüll- bzw. Umfangsfläche, also der in radialer Blickrichtung äußerste Bereich der Oberfläche. Grund- bzw. Deckfläche des Zylinders sind dann die Flächen senkrecht zu seiner Rotationsachse. Die zu einem Scheibenpaket angeordneten benachbarten Scheiben sind durch die an den Scheiben angeordneten Ausformungen voneinander beabstandet, wodurch jeweils ein Spalt ausgebildet wird. Im jeweiligen Spalt ist zumindest im Bereich der Ausformungen eine Fügeverbindung als Lötverbindung vorhanden. Die Lötverbindung erstreckt sich ausgehend von der Mantelfläche radial einwärts lediglich bis zu den Ausformungen und umschließt diese. Die Fügeverbindung ist auch im gesamten jeweiligen Spalt zwischen zwei Scheiben vorhanden.

Durch das Fügematerial werden die Läuferstäbe mit den Scheiben eines Kurzschlussringes elektrisch leitend verbunden. Die auf den Scheiben angeordneten Ausformungen liegen radial gesehen innerhalb der Ausnehmungen für die Läuferstäbe.

Ein besonderer Vorteil der erfindungsgemäßen Lösung ergibt sich aus einer kostengünstigen Herstellung der einzelnen Scheiben aus Bandmaterial durch Stanzen und Prägen. Durch die Ausformungen kann ein definierter Fügespalt zwischen den Scheiben sowie den Läuferstäben eingestellt werden. Ein sich durch die Ausformungen einstellender Abstand der ersten am Läuferblechpaket liegenden Scheibe kann als verbleibender Spalt zur Kühlung dienen.

In der erfinderischen Ausgestaltung ist die Fügeverbindung eine Lötverbindung. Das Lot ist von der Mantelfläche ausgehend mittels thermischer Behandlung separat in einen Spalt eingebracht worden. Hierdurch wird ein eng begrenzter jedoch ausreichender Fügebereich zumindest im äußeren Bereich nahe der Mantelfläche eines Kurzschlussrings gebildet. Dieser Fügebereich liefert durch eine Lotverbindung ausreichend mechanische Festigkeit des gesamten Bauteils. Ebenso stellt sich auch ein zufriedenstellender elektrischer Kontakt der Läuferstäbe mit den Kurzschlussringen ein.

Hinzukommend sind die Ausformungen stufenartig ausgebildet.

Die Ausformungen weisen eine gewisse Kontaktfläche auf, welche im Kurzschlussring mit der benachbarten Scheibe in Kontakt tritt. Insbesondere rechteckige Stufenformen weisen daher eine ausreichende Stabilität und bewirken eine genau definierte Spaltweite.

In einer bevorzugter Ausgestaltung der Erfindung können an der Rückseite der Ausformungen Einbuchtungen ausgebildet sein. Die Einbuchtungen sind insbesondere so ausgeführt, dass zumindest ein gewisser Volumenanteil geeigneter Ausnehmungen einer benachbarten Scheibe in die Einbuchtungen passgenau eingreifen kann. Dies bewirkt in einem Scheibenpaket eines Kurzschlussringes eine gewisse Verzahnung der einzelnen Scheiben untereinander.

Vorteilhafterweise können die Einbuchtungen stufenartig ausgebildet sein. Die Stufengeometrie kann hierbei so beschaffen sein, dass eine rechteckige Stufenform einer Ausformung passgenau ineinandergreift.

In weiterer vorteilhafter Ausgestaltung der Erfindung können die Ausformungen einer Scheibe zu einem Teil in die Einbuchtungen einer benachbarten Scheibe eingreifen. Bei einem teilweisen Eingreifen können für eine Fügeverbindung Nischen und zusätzliche Hohlräume im unmittelbaren Umfeld der Ausformungen einer Scheibe gebildet werden, welche mit Fügematerial ausgefüllt werden. Hierdurch werden ein zusätzlicher Stoffschluss und damit eine bessere Fügeverbindung zwischen den einzelnen Scheiben hergestellt.

Bei einer vorteilhaften Ausführungsform der Erfindung können die Ausformungen einer Scheibe in hinterschnittene Einbuchtungen einer benachbarten Scheibe eingreifen. In hinterschnittene Einbuchtungen können geeignete Ausformungen unter einer gewissen Vorspannung eingreifen und so einen zusätzlichen Zusammenhalt benachbarter Scheiben bewirken.

In bevorzugter Ausführungsform der Erfindung kann das Volumen einer jeweiligen Einbuchtung nur teilweise von einer in diese eingreifenden Ausformung ausgefüllt sein, wodurch Lot der Fügeverbindung das über den Spalt zugängliche Restvolumen der Einbuchtung ausfüllt. Hierdurch wird gegenüber rein flachen Scheiben insgesamt der Anteil die Fügefläche vergrößert und so die Anbindung zweier Scheiben aneinander verbessert.

Weitere Ausführungsbeispiele der Erfindung werden anhand der Figuren näher erläutert.

Darin zeigen:
Fig. 1 schematisch einen Längsschnitt durch einen Kurzschlussläufer,
Fig. 2 einen Detailausschnitt aus Figur 1 im Bereich A der Kurzschlussringe,
Fig. 3 schematisch den Stanzvorgang von Ausnehmungen an einer Scheibe, und
Fig. 4 schematisch den Prägevorgang für Ausformungen in einer Scheibe.

Einander entsprechende Teile sind in allen Figuren mit denselben Bezugszeichen versehen.

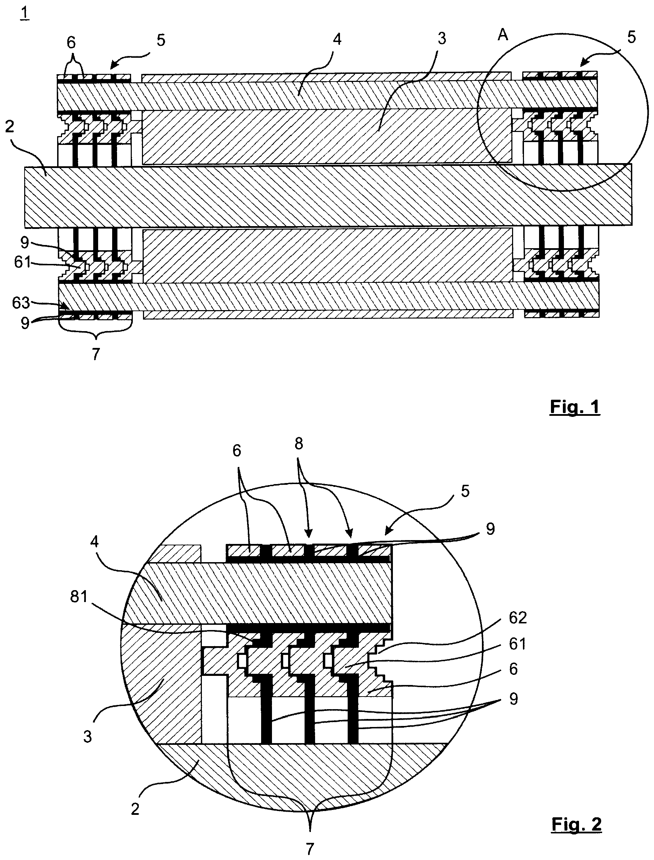

Figur 1 zeigt schematisch einen Längsschnitt durch einen Kurzschlussläufer 1. In diesem Zustand ist das Läuferblechpaket 3 auf der Welle 2 positioniert, kombiniert mit zwei Kurzschlussringen 5, die das Läuferblechpaket 3 stirnseitig abschließen. Im Innern des Blechpakets 3 und der Kurzschlussringe 5 sind mehrere Läuferstäbe 4 angeordnet. Die Stabenden der Läuferstäbe 4 ragen in Ausnehmungen 63 der Kurzschlussringe 5 hinein und schließen bündig mit der jeweils äußersten Scheibe 6 des Scheibenpakets 7 ab. Benachbarte Scheiben 6 im Scheibenpaket 7 sind infolge von in den Scheiben 6 angeordneten Ausformungen 61 untereinander beabstandet.

Ein Scheibenpaket 7 besteht in diesem Fall aus vier Scheiben 6, welche ausgehend von der Mantelfläche als Stirnseite der jeweiligen Scheiben 6 über den Außenumfang mittels Lötverbindungen 9 verbunden sind. Die Lötverbindungen 9 erstrecken sich radial in Richtung Welle 2 einwärts. Bei der gezeigten Ausgestaltung reichen die Lötverbindungen 9 radial betrachtet ganz nach innen und umschließen die Ausformungen 61. Durch einen gewissen Restspalt dringt im dargestellten Fall das Material der Lötverbindungen 9 auch axial zwischen Ausnehmungen 63 und die Läuferstäbe 4 ein.

Figur 2 zeigt einen Detailausschnitt aus Figur 1 im Bereich A der Kurzschlussringe. Das Scheibenpaket 7 eines Kurzschlussringes 5 ist aus mehreren einzelnen Scheiben 6 mit gleichem Durchmesser aufgebaut. Jede Scheibe 6 weist Ausformungen 61 auf, wodurch beim Paketieren der Scheiben 6 zu einem Scheibenpaket 7 zwischen benachbarten Scheiben 6 ein Spalt 8 gebildet wird. In den jeweiligen Spalt 8 wird Lot als Fügeverbindung 9 eingebracht. Die Ausformungen 61 sind durch einen Stanzprozess ausgebildet, bei dem an der Rückseite der Ausformungen 61 entsprechende Einbuchtungen 62 ausgebildet werden. Ausformungen 61 und Einbuchtungen 62 sind stufenartig so beschaffen, dass diese paarweise ineinander passen. Auf diese Weise greifen die Ausformungen 61 einer Scheibe 6 zu einem gewissen Teil in die Einbuchtungen 62 einer benachbarten Scheibe 6 ein. Das Volumen einer jeweiligen Einbuchtung 62 ist nur teilweise von einer in diese eingreifenden Ausformung 61 ausgefüllt. Hierdurch kann Lot der Fügeverbindung 9 in das über den Spalt 8 zugängliche Restvolumen 81 der Einbuchtung 62 eindringen. Der Kurzschlussring 5 umschließt die Welle 2 ringartig und ist als kompaktes Bauteil elektrisch gut leitend mit den Läuferstäben 4 verbunden.

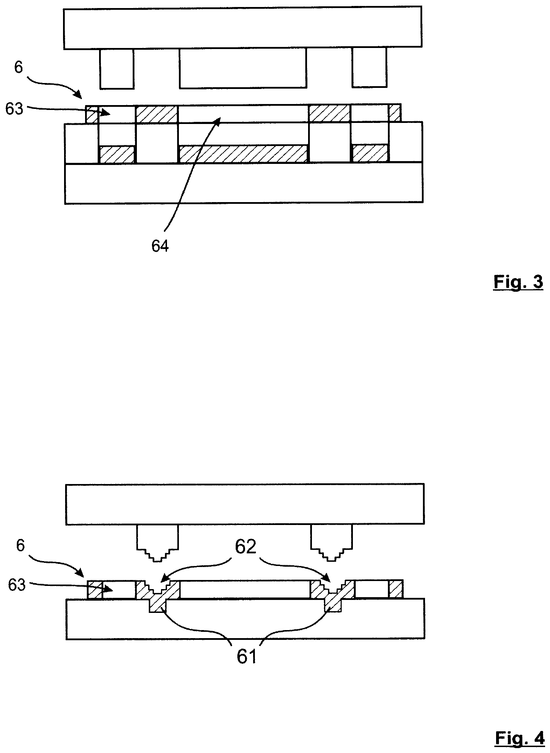

Figur 3 zeigt einen der ersten Verfahrensschritte, bei dem Ausnehmungen 63 für die Läuferstäbe und Zentralausnehmungen 64 für die Welle aus einem Blechrohling zu einer Scheibe 6 gestanzt werden. Die Zentralausnehmungen 64 kann dabei so groß gewählt werden, dass eine ringartige Scheibe 6 gebildet wird, deren Durchmesser auch wesentlich größer sein kann, als der Wellendurchmesser.

Figur 4 zeigt einen weiteren Verfahrensschritt, bei dem Ausformungen 61 und Einbuchtungen 62 in die Scheibe 6 geprägt werden. Das Prägewerkzeug erzeugt einen mehrfach gestuften Verlauf der Einbuchtungen 62. Die Stufung bei den Einbuchtungen 62 ist so ausgeführt, dass diese mit den Ausformungen 61 einer benachbart angeordneten Scheibe 6 beim Zusammenfügen ineinander greifen.

### Bezugszeichenliste

- 1: Kurzschlussläufer
- 2: Welle
- 3: Läuferblechpaket
- 4: Läuferstab
- 5: Kurzschlussring
- 6: Scheibe
- 61: Ausformungen
- 62: Einbuchtungen
- 63: Ausnehmung für Läuferstab
- 64: Zentralausnehmung
- 7: Scheibenpaket
- 8: Spalt
- 81: Restvolumen
- 9: Fügeverbindung, Lötverbindung
- A: Ausschnitt Detailbild

## Patentansprüche

1. Kurzschlussläufer (1), insbesondere für eine Asynchronmaschine, mit Welle (2), Läuferblechpaket (3) mit im Innern angeordneten Läuferstäben (4) und Kurzschlussringen (5), wobei zumindest ein Teil eines Kurzschlussringes (5) aus einem Scheibenpaket (7) besteht, welches lagenweise aus Scheiben (6) mit Ausnehmungen (63) aufgebaut ist, durch welche die Enden der Läuferstäbe (4) aus dem Läuferblechpaket (3) hindurchtreten,
wobei benachbarte Scheiben (6) im Scheibenpaket (7) untereinander beabstandet sind und einen Spalt (8) ausbilden,
wobei der durch den Spalt (8) verursachte Abstand zwischen zwei benachbarten Scheiben (6) durch in den Scheiben (6) angeordnete Ausformungen (61) gebildet ist,
**dadurch gekennzeichnet,**
- **dass** im Spalt (8) zumindest im Bereich der Ausformungen (61) eine Lötverbindung (9) über den Außenumfang vorhanden ist, wobei sich die Lötverbindung (9) radial in Richtung Welle (2) einwärts erstreckt und die Ausformungen (61) umschließt,
- **dass** das Material der Lötverbindung (9) auch axial in einen Restspalt zwischen Ausnehmungen (63) und die Läuferstäbe (4) eingebracht ist, und
- **dass** die Ausformungen (61) stufenartig ausgebildet sind.

2. Kurzschlussläufer nach Anspruch 1, **dadurch gekennzeichnet, dass** an der Rückseite der Ausformungen (61) Einbuchtungen (62) ausgebildet sind.

3. Kurzschlussläufer nach Anspruch 2, **dadurch gekennzeichnet, dass** die Einbuchtungen (62) stufenartig ausgebildet sind.

4. Kurzschlussläufer nach Anspruch 2 oder 3, **dadurch gekennzeichnet, dass** die Ausformungen (61) einer Scheibe (6) zu einem Teil in die Einbuchtungen (62) einer benachbarten Scheibe (6) eingreifen.

5. Kurzschlussläufer nach Anspruch 4, **dadurch gekennzeichnet, dass** die Ausformungen (61) einer Scheibe (6) in hinterschnittene Einbuchtungen (62) einer benachbarten Scheibe (6) eingreifen.

6. Kurzschlussläufer nach Anspruch 4, **dadurch gekennzeichnet, dass** das Volumen einer jeweiligen Einbuchtung (62) nur teilweise von einer in diese eingreifende Ausformung (61) ausgefüllt ist, wodurch Lot der Lötverbindung (9) das über den Spalt (8) zugängliche Restvolumen (81) der Einbuchtung (62) ausfüllt.

## Claims

1. Squirrel cage rotor (1), in particular for an asynchronous machine, having a shaft (2), rotor plate stack (3) having rotor bars (4) which are arranged internally and short-circuit rings (5), wherein at least a portion of a short-circuit ring (5) comprises a disc stack (7) which is constructed in layers from discs (6) having recesses (63) through which the ends of the rotor bars (4) extend from the rotor plate stack (3),
wherein adjacent discs (6) are spaced apart from each other in the disc stack (7) and form a gap (8),
wherein the spacing caused by the gap (8) between two adjacent discs (6) is formed by formations (61) arranged in the discs (6),
**characterised in that**
- in the gap (8) at least in the region of the formations (61) a solder connection (9) is provided over the outer circumference, wherein the solder connection (9) extends radially inwards in the direction of the shaft (2) and surrounds the formations (61),
- **in that** the material of the solder connection (9) is also introduced axially into a remaining gap between recesses (63) and the rotor bars (4), and
- **in that** the formations (61) are formed in a step-like manner.

2. Squirrel cage rotor according to claim 1, **characterised in that** indentations (62) are formed at the rear side of the formations (61).

3. Squirrel cage rotor according to claim 2, **characterised in that** the indentations (62) are constructed in a step-like manner.

4. Squirrel cage rotor according to claim 2 or 3, **characterised in that** the formations (61) of a disc (6) partially engage in the indentations (62) of an adjacent disc (6) .

5. Squirrel cage rotor according to claim 4, **characterised in that** the formations (61) of a disc (6) engage in undercut indentations (62) of an adjacent disc (6).

6. Squirrel cage rotor according to claim 4, **characterised in that** the volume of a respective indentation (62) is filled only partially by a formation (61) which engages therein, whereby solder of the solder connection (9) fills the remaining volume (81), which is accessible via the gap (8), of the indentation (62).

## Revendications

1. Rotor en court-circuit (1), en particulier pour une machine asynchrone, avec un arbre (2), un noyau laminé de rotor (3) avec des barres de rotor (4) disposées à l'intérieur et des anneaux de court-circuit (5), où au moins une partie d'un anneau de court-circuit (5) consiste en un empilement de disques (7) qui est constitué par couches de disques (6) avec des évidements (63) à travers lesquels les extrémités des barres de rotor (4) passent depuis le noyau laminé de rotor (3), où les disques (6) adjacents dans le empilement de disques (7) sont distants les uns des autres et forment un interstice (8), où la distance due à l'interstice (8) entre deux disques (6) adjacents est formée par des saillies (61) disposées dans les disques (6), **caractérisé**
- **en ce qu'**une liaison soudée (9) est présente sur la circonférence extérieure dans l'interstice (8) au moins au niveau des saillies (61), où la liaison soudée (9) s'étend radialement vers l'intérieur en direction de l'arbre (2) et entoure les saillies (61),
- **en ce que** le matériau de la liaison soudée (9) est introduit également axialement dans un interstice résiduel entre les évidements (63) et les barres de rotor (4), et
- **en ce que** les saillies (61) sont réalisées sous forme de marches.

2. Rotor en court-circuit selon la revendication 1, **caractérisé en ce que** des échancrures (62) sont réalisées du côté dorsal des saillies (61).

3. Rotor en court-circuit selon la revendication 2, **caractérisé en ce que** les échancrures (62) sont réalisées sous forme de marches.

4. Rotor en court-circuit selon la revendication 2 ou 3, **caractérisé en ce que** les saillies (61) d'un disque (6) s'engagent partiellement dans les échancrures (62) d'un disque (6) adjacent.

5. Rotor en court-circuit selon la revendication 4, **caractérisé en ce que** les saillies (61) d'un disque (6) s'engagent dans des échancrures en contre-dépouille (62) d'un disque (6) adjacent.

6. Rotor en court-circuit selon la revendication 4, **caractérisé en ce que** le volume d'une échancrure (62) respective n'est rempli que partiellement par une saillie (61) qui s'engage dans celle-ci, de sorte que la soudure de la liaison soudée (9) remplit le volume résiduel (81) de l'échancrure (62) accessible par l'interstice (8).
